# EUROPÄISCHE PATENTSCHRIFT

(11) **EP 3 523 603 B1**
(45) Veröffentlichungstag und Bekanntmachung des Hinweises auf die Patenterteilung: **25.08.2021**
(21) Anmeldenummer: 17781105.6
(22) Anmeldetag: 09.10.2017
(51) Int. Cl.: G01B 11/24, G01D 11/24

(54) **GEHÄUSE FÜR EIN FELDGERÄT DER MESS- UND AUTOMATISIERUNGSTECHNIK ZUR ÜBERWACHUNG UND/ODER BESTIMMUNG MINDESTENS EINER PROZESSGRÖSSE EINES MEDIUMS**
HOUSING FOR A FIELD DEVICE IN MEASURING AND AUTOMATION TECHNOLOGY FOR MONITORING AND/OR DETERMINING AT LEAST ONE PROCESS VARIABLE OF A MEDIUM
BOITIER POUR APPAREIL DE TERRAIN DE LA TECHNOLOGIE DES MESURES ET DE L'AUTOMATISATION, PERMETTANT DE SURVEILLER ET/OU DE DÉTERMINER AU MOINS UNE GRANDEUR DE PROCESSUS D'UN FLUIDE

(30) Priorität: 10.10.2016 DE 102016119180
(43) Veröffentlichungstag der Anmeldung: 14.08.2019
(73) Patentinhaber: Endress+Hauser Flowtec AG, 4153 Reinach (CH)
(72) Erfinder: MOSER, Thiérry, 68510 Sierentz (FR); HÄNGGI, Niklaus, 4052 Basel (CH)
(74) Vertreter: Andres, Angelika Maria
(86) Internationale Anmeldenummer: PCT/EP2017/075639
(87) Internationale Veröffentlichungsnummer: WO 2018/069226

(56) Entgegenhaltungen:
- KR-B1- 100 921 791
- US-A1- 2010 257 930
- US-A1- 2011 058 313
- US-A1- 2011 147 384

## Beschreibung

Die Erfindung betrifft ein Gehäuse für ein Feldgerät der Mess- und Automatisierungstechnik zur Überwachung und/oder Bestimmung mindestens einer Prozessgröße eines Mediums.

Gehäuse von Feldgeräten weisen in ihrem Inneren eine oder mehrere Gehäusekammern auf, in welcher Gehäusekammer eine elektronische Mess- und/oder Betriebsschaltung untergebracht ist. Zusätzlich weisen Feldgeräte mindestens eine durch einen Deckel verschließbare Öffnung auf, beispielsweise um einen Zugang zur elektronischen Mess- und/oder Betriebsschaltung zu haben, oder um ein Fenster zu einer Anzeigeeinheit bereitzustellen.

Der Stand der Technik in Form der Offenlegungsschrift DE102005059662A1 zeigt Deckelverschlüsse, bei denen der Deckel entweder über mindestens eine Schraube an das Gehäuse angepresst wird, oder der Deckel weist ein Gewinde auf, mit welchem er an ein Gewinde des Gehäuses angeschraubt wird. Das Dokument US 2011/058313 A1 zeigt ein Gehäuse für ein Feldgerät der Mess- und Automatisierungstechnik. Die Dokumente KR 100 921 791 B1, US 2011/147384 A1 und US 2010/257930 A1 zeigen weitere Gehäuse.

Im Bereich der Lebensmittel- und Pharmaindustrie sind die bekannten Deckelverschlüsse nachteilhaft, weil einerseits eine Anpressung des Deckels an das Gehäuse mittels einer Schraube einen Zugang zum Inneren des Gehäuses darstellt, und andererseits ein Gewinde nur schlecht an oder in ein Gehäuse eingebracht werden kann, so dass geringe Toleranzen, bzw. Spaltmaße wenn überhaupt nur mit hohem Aufwand erreicht werden können.

Aufgabe ist es daher, ein Gehäuse vorzuschlagen, welches die unter hygienischen Gesichtspunkten oben genannten Nachteile vermeidet.

Die Aufgabe wird gelöst durch ein Gehäuse gemäß dem unabhängigen Anspruch 1, durch ein Messumformermodul gemäß dem Anspruch 11 und durch ein Messgerät gemäß dem Anspruch 12.

Das erfindungsgemäße Gehäuse für ein Feldgerät der Mess- und Automatisierungstechnik zur Überwachung und/oder Bestimmung mindestens einer Prozessgröße eines Mediums, umfasst mindestens einen Gehäusekörper, der in seinem Inneren eine Gehäusekammer aufweist, welche durch eine Gehäusewand umfasst ist;
und mindestens einen Deckel;
wobei die Gehäusewand mindestens eine Öffnung aufweist, welche durch den Deckel verschließbar ist,
wobei
das Gehäuse mindestens ein Gewindeelement aufweist, welches in die Öffnung eingesetzt ist, insbesondere lösbar befestigt eingesetzt ist, wobei das Gewindeelement zur Aufnahme des Deckels eingerichtet ist, wobei die Öffnung mittels des Deckels dicht verschließbar ist,
und wobei das Gewindeelement ein erstes Gewinde aufweist, und wobei der Deckel ein zum ersten Gewinde komplementäres zweites Gewinde und wobei die Gehäusewand im Inneren der Gehäusekammer mindestens ein Halteelement zum Halten des Gewindeelements aufweist und wobei das Gehäuse ein Dichtelement aufweist,

welches zwischen dem Gehäusekörper und dem Deckel angeordnet und dazu eingerichtet ist, einen Spalt zwischen Gehäusekörper und Deckel zu verschließen und wobei das Gewindeelement auf einer dem Deckel zugewandten Stirnseite mindestens einen Anschlag aufweist,

wobei der Anschlag aus der Stirnseite hervorsteht, und wobei das Dichtelement eine zum Anschlag komplementäre dritte Öffnung aufweist, und wobei das Dichtelement durch Einbringen des Anschlags in die dritte Öffnung am Gewindeelement befestigbar ist.

In einer Ausgestaltung ist das Halteelement durch Kleben, Schweißen oder Löten an der Gehäusewand befestigt.

In einer Ausgestaltung ist das Gewindeelement formschlüssig oder stoffschlüssig mit dem Halteelement verbunden,
wobei das Verbinden insbesondere durch Löten, Schweißen, Kleben, Nieten, Verschrauben mittels einer Schraube mit Mutter, oder Rasten mittels eines Rastmechanismus bewerkstelligt ist.

In einer Ausgestaltung weist das Halteelement ein erstes Segment und ein zweites Segment auf, wobei das zweite Segment sich an das erste Segment anschließt,
und wobei das erste Segment dazu eingerichtet ist, an der Gehäusewand befestigt zu werden, und wobei das zweite Segment dazu eingerichtet ist, mit dem Gewindeelement verbunden zu werden.

In einer Ausgestaltung schließt das erste Segment und das zweite Segment einen Winkel von mindestens 45 Grad und insbesondere mindestens 65 Grad und bevorzugt mindestens 85 Grad und höchstens 135 Grad und insbesondere höchstens 115 Grad und bevorzugt höchstens 95 Grad ein.

In einer Ausgestaltung ist das Gehäuse aus zwei Halbschalen gefertigt, welche Halbschalen durch Schweißen, Löten oder Kleben gefügt sind.

In einer Ausgestaltung sind die Halbschalen durch Tiefziehen gefertigt.

In einer Ausgestaltung weist das Gehäuse eine erste Öffnung und eine zweite Öffnung auf,
wobei eine erste Gewindeachse der ersten Öffnung und eine zweite Gewindeachse der zweiten Öffnung einen Schnittwinkel von mindestens 45 Grad und insbesondere mindestens 65 Grad und bevorzugt mindestens 85 Grad und höchstens 135 Grad und insbesondere höchstens 115 Grad und bevorzugt höchstens 95 Grad aufweisen.

In einer Ausgestaltung weist der Gehäusekörper einen ersten Werkstoff und das Gewindeelement einen zweiten Werkstoff auf, der vom ersten Werkstoff verschieden ist.

In einer Ausgestaltung umfasst der zweite Werkstoff Kunststoff, Gußstahl oder Aluminium, und wobei der erste Werkstoff ein Stahlblech, insbesondere aus Edelstahl umfasst.

Das erfindungsgemäße Messumformermodul umfasst ein erfindungsgemäßes Gehäuse und eine Elektronikeinheit zur Verarbeitung eines die Prozessgröße repräsentierenden Messsignals,
wobei die Elektronikeinheit in der Gehäusekammer angeordnet ist;

Das erfindungsgemäße Messgerät umfasst ein erfindungsgemäßes Messumformermodul und ein Sensormodul zum Erfassen einer Messgröße und zum Bereitstellen von Messgrößenabhängigen Signalen;
wobei das Sensormodul mit dem Messumformermodul elektrisch und mechanisch verbunden ist, wobei die Elektronikeinheit dazu eingerichtet ist, die von dem Sensormodul bereitgestellten Signale zu verarbeiten.

Es wird also durch die vorliegende Erfindung ein Gehäuse mit einem lösbar befestigbaren Gewindeelement, welches in die Öffnung eingesetzt ist, wobei das Gewindeelement lösbar befestigt eingesetzt ist, sowie ein Messumformermodul und ein Messgerät vorgeschlagen.

Im Folgenden wird die Erfindung anhand von Ausführungsbeispielen beschrieben.
Fig. 1 zeigt ein Ausführungsbeispiel erfindungsgemäßes Gehäuse mit einsetzbaren Gewindeelementen, Dichtelementen und Deckeln;
Fig. 2 zeigt Gewindeelemente mit Dichtelementen mit einer Detailansicht eines Verbindungsmechanismus zwischen Gewindeelement und Dichtelement eines Ausführungsbeispiels eines erfindungsgemäßen Gehäuses;
Fig. 3 zeigt zwei zu einem Gehäuse zusammensetzbare Gehäusehalbschalen eines Ausführungsbeispiels eines erfindungsgemäßen Gehäuses mit einem Verbindungsring; und
Fig. 4 zeigt ein erfindungsgemäßes Gehäuse mit eingesetzten erfindungsgemäßen Gewindeelementen und Messaufnehmeranschluss.
Fig. 5 zeigt ein Halteelement eines Ausführungsbeispiels eines erfindungsgemäßen Gehäuses mit dazugehörigem Verbindungselement eines Gewindeelements.

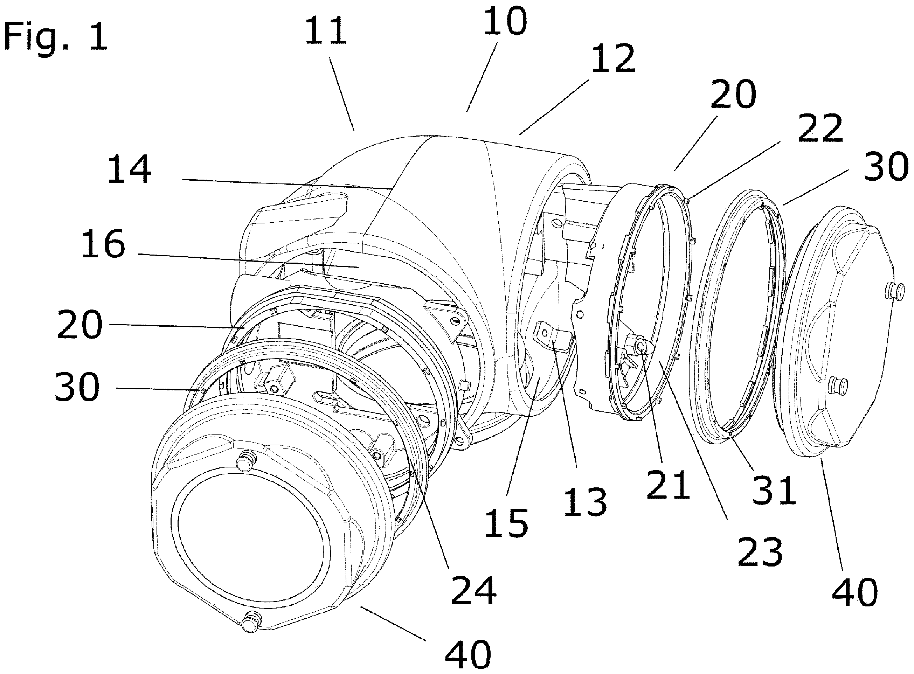

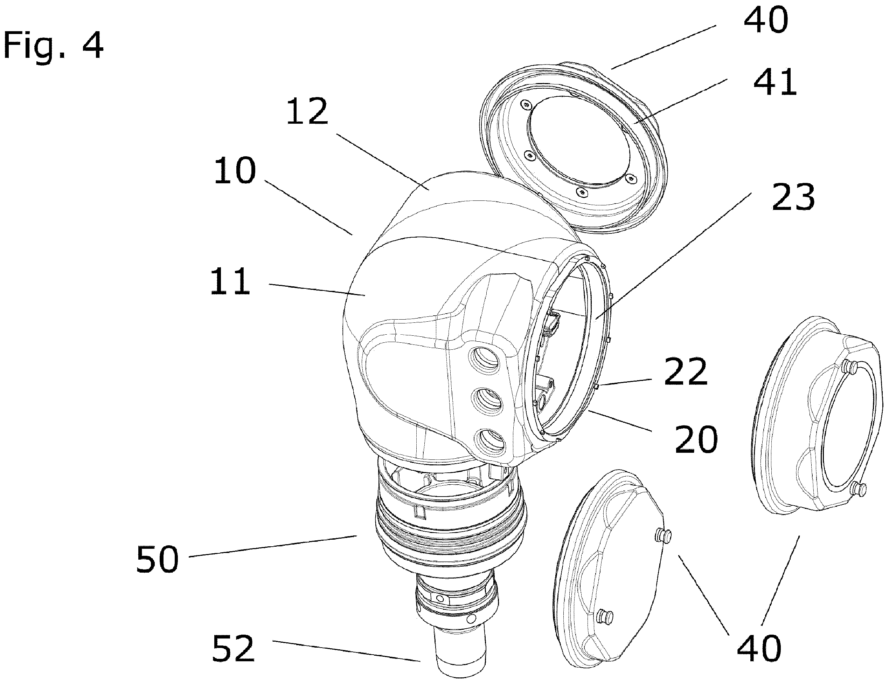

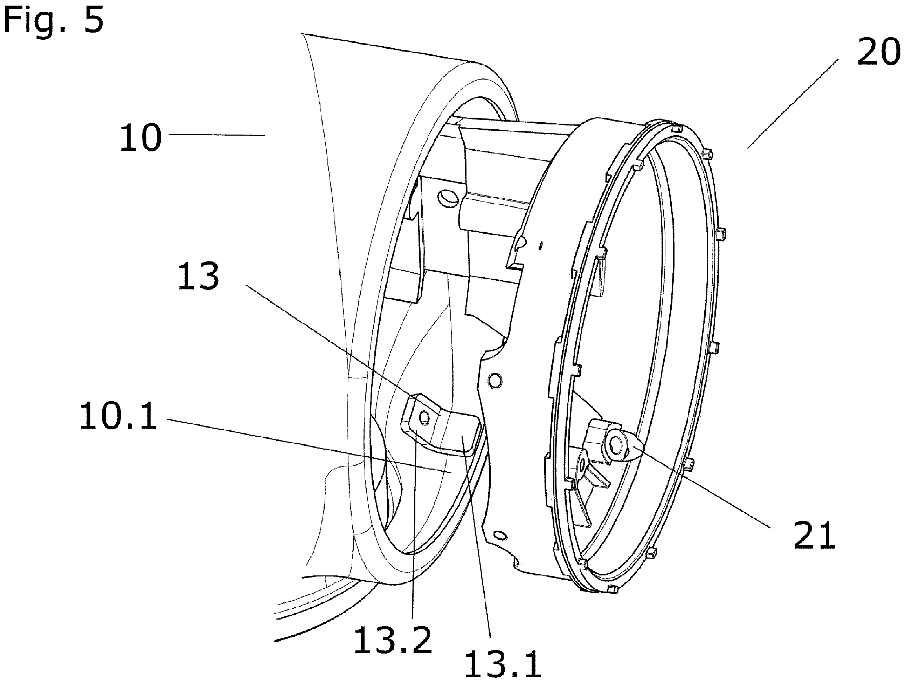

Fig. 1 zeigt ein Ausführungsbeispiel eines erfindungsgemäßen Gehäuses 10 umfassend zwei Gehäusehalbschalen 11, 12, welche entlang zweier Kontaktflächen 14 zusammengefügt sind und eine erste Öffnung 15 und eine zweite Öffnung 16 definieren. In die erste Öffnung 15 und in die zweite Öffnung 16 ist jeweils ein erfindungsgemäßes Gewindeelement 20 einsetzbar, welche Gewindeelemente 20 mittels jeweils mindestens einem Verbindungselement 21 über mindestens ein korrespondierendes Halteelement 13 des Gehäuses 10 am Gehäuse lösbar befestigt sind. Die Befestigung des Gewindeelements 20 am Halteelement 13 des Gehäuses lässt sich dabei durch Verschrauben mittels einer Schraube mit Mutter bewerkstelligen. Alternativ lässt sich das Befestigen auch durch Löten, Schweißen, Kleben, Nieten, oder Rasten mittels eines Rastmechanismus bewerkstelligen. Das in Fig. 1 und Fig. 5 beispielhaft gezeigte Halteelement 21 und Verbindungselement 21 weisen jeweils eine Öffnung zum Aufnehmen eine Schraube auf. Die Gewindeelemente 20 weisen jeweils ein erstes Gewinde 23 auf, welches wie in Fig. 1 gezeigt ein Innengewinde ist, aber auch ein Außengewinde sein kann. Über das erste Gewinde 23 lässt sich der Deckel 40 mit einem zum ersten Gewinde 23 komplementären, in Fig. 4 gezeigten zweiten Gewinde 41 durch Aufschrauben des Deckels 40 mit dem Gewindeelement 20 verbinden. Das Gewindeelement 20 weist Anschläge 22 auf, welche dazu eingerichtet sind, das Aufschrauben des Deckels bei Erreichen einer Sollposition zu stoppen. Ein Dichtelement 30, welches zwischen dem Gewindeelement 20 und dem Deckel 40 angeordnet ist, dichtet einen Spalt zwischen Deckel 40 und Gehäuse 10 ab. Die Anschläge 22 stehen aus einer ersten Seite 24, welche dem dazugehörigen Deckel 40 zugeordnet ist hervor und greifen in komplementäre dritte Öffnungen 31 des Dichtelements, um das Dichtelement 20 zu halten. Das Gewindeelement 20 umfasst dabei bevorzugt Kunststoff, Gussstahl oder Aluminium. Die erste Öffnung 15 und die zweite Öffnung 16 weisen dabei einen Winkel von 90 Grad zueinander auf.

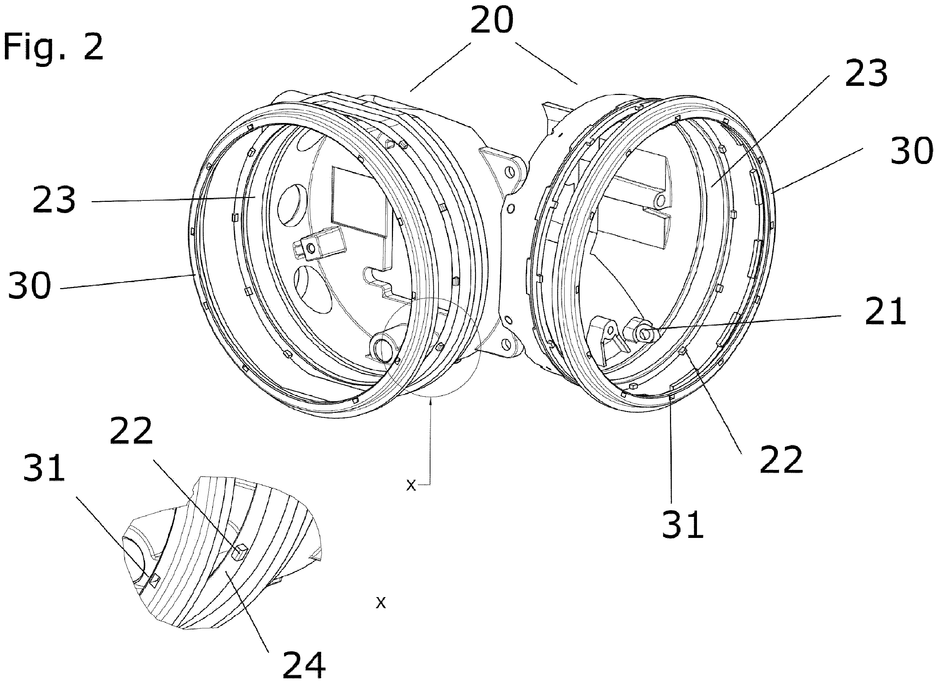

Fig. 2 zeigt eine Detailansicht zweier erfindungsgemäßer Gewindeelemente 20 mit dazugehörigen erfindungsgemäßen Dichtelementen 30. Der vergrößerte Ausschnitt X zeigt einen Anschlag 22, welcher aus einer ersten Seite 24 hervorsteht und eine dazugehörige dritte Öffnung 31 des Dichtelements 30.

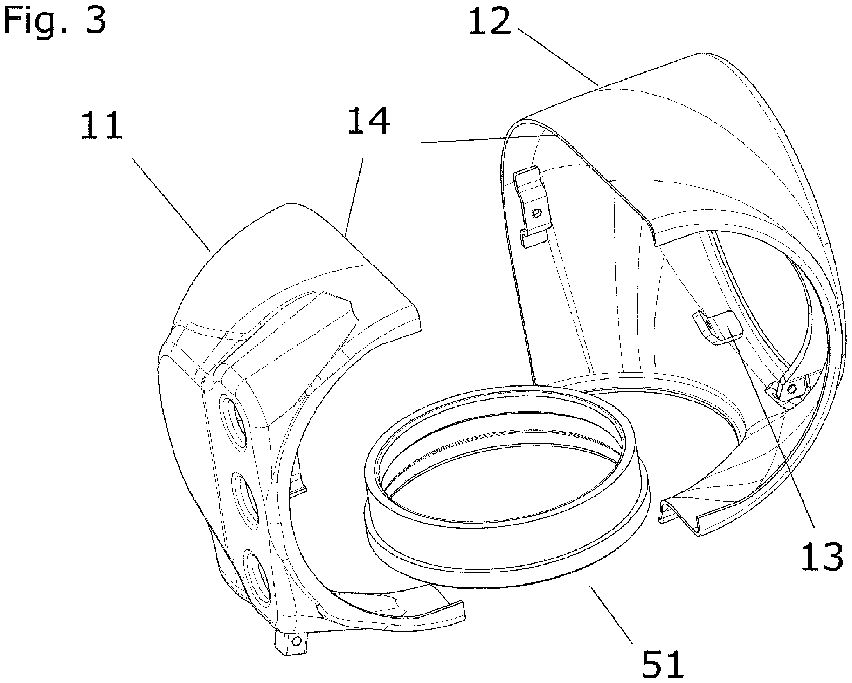

Fig. 3 zeigt zwei Gehäusehalbschalen 11, 12, welche entlang der Kontaktflächen 14 zu einem Gehäuse 10 zusammengefügt werden können. Je nach Materialbeschaffenheit der Gehäusehalbschalen 11, 12 kann der Fügeprozess Schweißen, Löten oder Kleben umfassen. Die Gehäusehalbschalen sind dabei bevorzugt aus einem Stahlblech durch Ziehen, insbesondere Tiefziehen gefertigt. Das Fügen der Gehäusehalbschalen definiert eine Öffnung des Gehäuses, in welcher ein Verbindungsring 51 eines in Fig. 4 gezeigten Sensormoduls 52 einsetzbar ist.

Fig. 4 zeigt ein Messgerät mit einem Messumformermodul mit einem Gehäuse 10 mit Gehäusehalbschalen 11, 12 und einem Sensormodul 52, wobei das Sensormodul an über einen Sensormodulanschluss 50 an das Messumformermodul 52 angeschlossen ist. Eine zum Messumformermodul gehörige Elektronikeinheit zur Verarbeitung eines die Prozessgröße repräsentierenden Messsignals ist nicht dargestellt. Der Sensormodulanschluss 50 ist dabei mittels des in Fig. 3 gezeigten Verbindungsrings 51 mit dem Gehäuse 10 zusammengefügt, insbesondere verschweißt. Deckel 40 weist ein zum ersten Gewinde 23 des Gewindeelements 20 komplementäres zweites Gewinde 41 auf, so dass der Deckel 40 mit dem Gewindeelement durch Schrauben verbindbar ist.

Fig 5 zeigt eine vergrößerte Ansicht eines Halteelements 13, welches an einer Gehäusewand 10.1 des Gehäuses 10 befestigt ist. Das Haltelement weist ein erstes Segment 13.1 und ein an das erste Segment anschließendes zweites Segment 13.2 auf, wobei das Halteelement 13 über das erste Segment 13.1 an der Gehäusewand 10.1 beispielsweise durch Schweißen, Kleben oder Löten befestigt ist. Das zweite Segment weist beispielsweise eine Öffnung zur Aufnahme einer Niete oder einer Schraube auf. Das zum Halteelement gehörige Verbindungselement 21 des Gewindeelements 20 weist beispielsweise ebenfalls eine Öffnung zur Aufnahme einer Niete oder Schraube auf, so dass das Gewindeelement mittels einer Schraube oder Niete über das Halteelement am Gehäuse befestigt werden kann. Bei einem erfindungsgemäßen Halteelement oder Verbindungselement kann aber auch auf eine Öffnung verzichtet werden, wenn das Verbinden beispielsweise durch Löten, Schweißen oder Kleben bewerkstelligt ist.

In das erfindungsgemäße Gehäuse 10 ist also ein Gewindeelement 20 lösbar befestigt einsetzbar, wobei das Gehäuse aus zwei Gehäusehalbschalen zusammensetzbar ist.

### Bezugszeichenliste

- 10: Gehäuse
- 10.1: Gehäusewand
- 11: Halbschale
- 12: Halbschale
- 13: Halteelement
- 13.1: Erstes Segment
- 13.2: Zweites Segment
- 14: Kontaktfläche
- 15: erste Öffnung
- 16: zweite Öffnung
- 20: Gewindeelement
- 21: Verbindungselement
- 22: Anschlag
- 23: erstes Gewinde
- 24: Stirnseite
- 30: Dichtelement
- 31: Dritte Öffnung
- 40: Deckel
- 41: zweites Gewinde
- 50: Sensormodulanschluss
- 51: Verbindungsring
- 52: Sensormodul

## Patentansprüche

1. Gehäuse (10) eingerichtet für ein Feldgerät der Mess- und Automatisierungstechnik zur Überwachung und/oder Bestimmung mindestens einer Prozessgröße eines Mediums, umfassend:
mindestens einen gewindelosen Gehäusekörper, der in seinem Inneren eine Gehäusekammer aufweist, welche durch eine Gehäusewand (10.1) umfasst ist;
und mindestens einen Deckel (40);
wobei die Gehäusewand (10.1) mindestens eine Öffnung (15, 16) aufweist, welche durch den Deckel (40) verschließbar ist,
wobei das Gehäuse mindestens ein Gewindeelement (20) aufweist, welches in die Öffnung (15, 16) eingesetzt ist, wobei das Gewindeelement (20) lösbar befestigt eingesetzt ist, wobei das Gewindeelement (20) zur Aufnahme des Deckels (40) eingerichtet ist, wobei die Öffnung (15, 16) mittels des Deckels (40) verschließbar ist und wobei das Gewindeelement (20) ein erstes Gewinde (23) aufweist, und wobei der Deckel (40) ein zum ersten Gewinde komplementäres zweites Gewinde (41) aufweist,
wobei die Gehäusewand (10.1) im Inneren der Gehäusekammer mindestens ein Halteelement (13) zum Halten des Gewindeelements (20) aufweist,
wobei das Gehäuse ein Dichtelement (30) aufweist, welches zwischen dem Gehäusekörper und dem Deckel (40) angeordnet und dazu eingerichtet ist, einen Spalt zwischen Gehäusekörper und Deckel (40) zu verschließen,
**dadurch gekennzeichnet, dass**
das Gewindeelement (20) auf einer dem Deckel (40) zugewandten Stirnseite (24) mindestens einen Anschlag (22) aufweist, welcher dazu eingerichtet ist,
das Aufschrauben des Deckels bei Erreichen einer Sollposition zu stoppen, wobei der Anschlag (22) aus der Stirnseite hervorsteht, und wobei das Dichtelement (30) eine zum Anschlag (22) komplementäre dritte Öffnung (31) aufweist, und wobei das Dichtelement durch Einbringen des Anschlags (22) in die dritte Öffnung (31) am Gewindeelement (20) befestigbar ist.

2. Gehäuse (10) nach einem der vorigen Ansprüche,
wobei das Halteelement (13) durch Kleben, Schweißen oder Löten an der Gehäusewand befestigt ist.

3. Gehäuse (10) nach einem der vorigen Ansprüche,
wobei das Gewindeelement (20) formschlüssig oder stoffschlüssig mit dem Halteelement (13) verbunden ist,
wobei das Verbinden insbesondere durch Löten, Schweißen, Kleben, Nieten, Verschrauben mittels einer Schraube mit Mutter, oder Rasten mittels eines Rastmechanismus bewerkstelligt ist.

4. Gehäuse (10) nach einem der vorigen Ansprüche,
wobei das Halteelement (13) ein erstes Segment (13.1) und ein zweites Segment (13.2) aufweist, wobei das zweite Segment sich an das erste Segment anschließt,
wobei das erste Segment (13.1) dazu eingerichtet ist, an der Gehäusewand (10.1) befestigt zu werden, und wobei das zweite Segment (13.2) mit dem Gewindeelement (20) verbunden ist.

5. Gehäuse (10) nach Anspruch 4,
wobei das erste Segment (13.1) und das zweite Segment (13.2) einen Winkel von mindestens 45 Grad und insbesondere mindestens 65 Grad und bevorzugt mindestens 85 Grad und höchstens 135 Grad und insbesondere höchstens 115 Grad und bevorzugt höchstens 95 Grad einschließen.

6. Gehäuse (10) nach einem der vorigen Ansprüche,
wobei das Gehäuse (10) aus zwei Halbschalen (11, 12) gefertigt ist, welche Halbschalen durch Schweißen, Löten oder Kleben gefügt sind.

7. Gehäuse (10) nach Anspruch 6,
wobei die Halbschalen (11, 12) durch Tiefziehen gefertigt sind.

8. Gehäuse (10) nach einem der vorigen Ansprüche,
wobei das Gehäuse (10) eine erste Öffnung (15) und eine zweite Öffnung (16) aufweist,
wobei eine erste Gewindeachse der ersten Öffnung (15) und eine zweite Gewindeachse der zweiten Öffnung (16) einen Schnittwinkel von mindestens 45 Grad und insbesondere mindestens 65 Grad und bevorzugt mindestens 85 Grad und höchstens 135 Grad und insbesondere höchstens 115 Grad und bevorzugt höchstens 95 Grad aufweisen.

9. Gehäuse (10) nach einem der vorhergehenden Ansprüche,
wobei der Gehäusekörper einen ersten Werkstoff und das Gewindeelement (20) einen zweiten Werkstoff aufweist, der vom ersten Werkstoff verschieden ist.

10. Gehäuse (10) nach Anspruch 9,
wobei der zweite Werkstoff Kunststoff, Gußstahl oder Aluminium umfasst,
und wobei der erste Werkstoff ein Stahlblech umfasst.

11. Messumformermodul, umfassend:
ein Gehäuse (10) nach einem der vorigen Ansprüche; und
eine Elektronikeinheit zur Verarbeitung eines die Prozessgröße repräsentierenden Messsignals,
wobei die Elektronikeinheit in der Gehäusekammer angeordnet ist.

12. Messgerät, umfassend:
ein Messumformermodul nach Anspruch 11; und
ein Sensormodul (52) zum Erfassen einer Messgröße und zum Bereitstellen von Messgrößenabhängigen Signalen;
wobei das Sensormodul (52) mit dem Messumformermodul elektrisch und mechanisch verbunden ist, wobei die Elektronikeinheit dazu eingerichtet ist, die von dem Sensormodul bereitgestellten Signale zu verarbeiten.

## Claims

1. Housing (10) designed for a field device used in measuring and automation technology, wherein said device is designed to monitor and/or determine at least a process variable of a medium, said housing comprising:
at least a thread-free housing body which has a housing chamber on the inside which is surrounded by a housing wall (10.1); and at least a cover (40);
wherein the housing wall (10.1) has at least one opening (15, 16) which can be closed by the cover (40),
wherein the housing has at least a threaded element (20) that is inserted into the opening (15, 16), wherein the threaded element (20) is inserted in a manner in which it is secured in a detachable manner, wherein the threaded element (20) is designed to receive the cover (40), wherein the opening (15, 16) can be closed by means of the cover (40),
and wherein the threaded element (20) has a first thread (23), and wherein the cover (40) has a second thread (41) to complement the first thread,
wherein the housing wall (10.1) has at least one retention element (13) inside the housing chamber to retain the threaded element (20),
wherein the housing has a sealing element (30) which is arranged between the housing body and the cover (40) and is designed to close a gap between the housing body and the cover (40),
**characterized in that**
on a front face (24) facing towards the cover (40), the threaded element (20) has at least a limit stop (22), wherein said limit stop is designed to stop the cover from being screwed on further once a target position is reached,
wherein the limit stop (22) projects out of the front face, and wherein the sealing element (30) has a third opening (31) to complement the limit stop (22), and wherein the sealing element can be secured on the threaded element (20) by introducing the limit stop (22) into the third opening (31).

2. Housing (10) as claimed in one of the previous claims,
wherein the retention element (13) is fixed on the housing wall by gluing, welding or soldering.

3. Housing (10) as claimed in one of the previous claims,
wherein the threaded element (20) is connected to the retention element (13) in a positive-locking manner or via a substance-to-substance bond,
wherein the connection is implemented particularly by soldering, welding, gluing, riveting, screwing with a screw and a nut, or by engaging with a locking mechanism.

4. Housing (10) as claimed in one of the previous claims,
wherein the retention element (13) comprises a first segment (13.1) and a second segment (13.2), wherein the second segment follows on from the first segment,
wherein the first segment (13.1) is designed to be fixed on the housing wall (10.1), and wherein the second segment (13.2) is connected to the threaded element (20).

5. Housing (10) as claimed in Claim 4,
wherein the first segment (13.1) and the second segment (13.2) form an angle of at least 45 degrees, particularly of at least 65 degrees, preferably of at least 85 degrees, and a maximum of 135 degrees, particularly a maximum of 115 degrees, preferably a maximum of 95 degrees.

6. Housing (10) as claimed in one of the previous claims,
wherein the housing (10) is made from two half-shells (11, 12), wherein the half-shells are joined by welding, soldering or gluing.

7. Housing (10) as claimed in Claim 6,
wherein the half-shells (11, 12) are made by deep-drawing.

8. Housing (10) as claimed in one of the previous claims,
wherein the housing (10) comprises a first opening (15) and a second opening (16),
wherein a first threaded axis of the first opening (15) and a second threaded axis of the second opening (16) have an angle of intersection of at least 45 degrees and particularly of at least 65 degrees and preferably of at least 85 degrees and a maximum of 135 degrees and particularly a maximum of 115 degrees and preferably a maximum of 95 degrees.

9. Housing (10) as claimed in one of the previous claims,
wherein the housing body has a first material and the threaded element (20) features a second material that is different to the first material.

10. Housing (10) as claimed in Claim 9,
wherein the second material comprises plastic, cast steel or aluminum, and wherein the first material comprises a steel plate.

11. Transmitter module, comprising:
a housing (10) as claimed in one of the previous claims; and
an electronic unit to process a measuring signal representing the process variable,
wherein the electronic unit is arranged in the housing chamber.

12. Measuring device, comprising:
a transmitter module as claimed in Claim 11; and
a sensor module (52) designed to measure a measured variable and to provide signals that depend on the measured variable;
wherein the sensor module (52) is electrically and mechanically connected to the transmitter module, wherein the electronic unit is designed to process the signals provided by the sensor module.

## Revendications

1. Boîtier (10) conçu pour un appareil de terrain de la technique de mesure et d'automatisation, lequel appareil est destiné à surveiller et/ou à déterminer au moins une grandeur de process d'un produit, lequel boîtier comprend :
au moins un corps de boîtier non fileté qui présente à l'intérieur une chambre de boîtier qui est entourée par une paroi de boîtier (10.1) ; et au moins un couvercle (40) ;
la paroi de boîtier (10.1) présentant au moins une ouverture (15, 16) pouvant être fermée par le couvercle (40),
le boîtier présentant au moins un élément fileté (20) qui est inséré dans l'ouverture (15, 16), l'élément fileté (20) étant inséré de manière à être fixé de manière amovible, l'élément fileté (20) étant conçu pour recevoir le couvercle (40), l'ouverture (15, 16) pouvant être fermée au moyen du couvercle (40),
et l'élément fileté (20) présentant un premier filetage (23), et le couvercle (40) présentant un deuxième filetage (41) complémentaire du premier filetage,
la paroi de boîtier (10.1) présentant au moins un élément de retenue (13) à l'intérieur de la chambre du boîtier pour retenir l'élément fileté (20),
le boîtier présentant un élément d'étanchéité (30) qui est disposé entre le corps du boîtier et le couvercle (40) et est conçu pour fermer un espace entre le corps du boîtier et le couvercle (40),
**caractérisé en ce que**
l'élément fileté (20) présente, sur une face frontale (24) tournée vers le couvercle (40), au moins une butée (22), laquelle butée est conçue pour arrêter le vissage du couvercle lorsqu'une position de consigne est atteinte,
la butée (22) faisant saillie à partir de la face d'extrémité, et l'élément d'étanchéité (30) présentant une troisième ouverture (31) complémentaire de la butée (22), et l'élément d'étanchéité pouvant être fixé à l'élément fileté (20) en introduisant la butée (22) dans la troisième ouverture (31).

2. Boîtier (10) selon l'une des revendications précédentes,
pour lequel l'élément de retenue (13) est fixé à la paroi du boîtier par collage, soudage ou brasage.

3. Boîtier (10) selon l'une des revendications précédentes,
pour lequel l'élément fileté (20) est relié par liaison de forme ou de matière à l'élément de maintien (13),
la liaison étant réalisée notamment par brasage, soudage, collage, rivetage, vissage au moyen d'une vis et d'un écrou, ou verrouillage au moyen d'un mécanisme de verrouillage.

4. Boîtier (10) selon l'une des revendications précédentes,
pour lequel l'élément de retenue (13) comprend un premier segment (13.1) et un deuxième segment (13.2), le deuxième segment étant adjacent au premier segment,
le premier segment (13.1) étant conçu pour être fixé à la paroi de boîtier (10.1), et le deuxième segment (13.2) étant relié à l'élément fileté (20).

5. Boîtier (10) selon la revendication 4,
pour lequel le premier segment (13.1) et le deuxième segment (13.2) forment un angle d'au moins 45 degrés, notamment d'au moins 65 degrés, de préférence d'au moins 85 degrés, et d'au plus 135 degrés, notamment d'au plus 115 degrés, de préférence d'au plus 95 degrés.

6. Boîtier (10) selon l'une des revendications précédentes,
pour lequel le boîtier (10) est constitué de deux demi-coques (11, 12), lesquelles demi-coques sont jointes par soudage, brasage ou collage.

7. Boîtier (10) selon l'a revendication 6,
pour lequel les demi-coques (11, 12) sont fabriquées par emboutissage profond.

8. Boîtier (10) selon l'une des revendications précédentes,
pour lequel le boîtier (10) comprend une première ouverture (15) et une deuxième ouverture (16),
un premier axe de filetage de la première ouverture (15) et un deuxième axe de filetage de la deuxième ouverture (16) présentant un angle d'intersection d'au moins 45 degrés et notamment d'au moins 65 degrés et de préférence d'au moins 85 degrés et d'au plus 135 degrés et notamment d'au plus 115 degrés et de préférence d'au plus 95 degrés.

9. Boîtier (10) selon l'une des revendications précédentes,
pour lequel le corps de boîtier est constitué d'un premier matériau et l'élément fileté (20) est constitué d'un deuxième matériau différent du premier matériau.

10. Boîtier (10) selon la revendication 9,
pour lequel le deuxième matériau comprend du plastique, de l'acier moulé ou de l'aluminium, et le premier matériau comprenant une tôle d'acier.

11. Module transmetteur, comprenant :
un boîtier (10) selon l'une des revendications précédentes ; et
une unité électronique destinée au traitement d'un signal de mesure représentant la grandeur de process,
l'unité électronique étant disposée dans la chambre du boîtier.

12. Appareil de mesure, comprenant :
un module transmetteur selon la revendication 11 ; et
un module capteur (52) destiné à mesurer une grandeur de mesure et à mettre à disposition des signaux dépendant de la grandeur de mesure ;
le module capteur (52) étant relié électriquement et mécaniquement au module transmetteur, l'unité électronique étant conçue pour traiter les signaux mis à disposition par le module capteur.
